# EUROPÄISCHE PATENTSCHRIFT

(11) **EP 2 872 767 B1**
(45) Veröffentlichungstag und Bekanntmachung des Hinweises auf die Patenterteilung: **08.06.2016**
(21) Anmeldenummer: 13734787.8
(22) Anmeldetag: 09.07.2013
(51) Int. Cl.: F02M 35/02, B01D 46/00, B60R 21/34

(54) **FRISCHLUFTANLAGENKOMPONENTE**
AIR INTAKE COMPONENT
COMPOSANT DU SYSTÈME D'ALIMENTATION D'AIR

(30) Priorität: 12.07.2012 DE 102012212251
(43) Veröffentlichungstag der Anmeldung: 20.05.2015
(73) Patentinhaber: Mahle International GmbH, 70376 Stuttgart (DE)
(72) Erfinder: FISCHER, Robert, 74321 Bietigheim (DE); ZIRKELBACH, Thomas, 71732 Tamm (DE)
(74) Vertreter: BRP Renaud & Partner mbB Rechtsanwälte Patentanwälte Steuerberater
(86) Internationale Anmeldenummer: PCT/EP2013/064476
(87) Internationale Veröffentlichungsnummer: WO 2014/009364

(56) Entgegenhaltungen:
- EP-A1- 1 426 237
- EP-A2- 2 036 787
- WO-A1-2006/051072
- DE-A1-102005 007 089
- DE-A1-102006 023 350
- DE-A1-102008 038 564
- DE-A1-102010 014 079
- JP-A- 2006 138 203

## Beschreibung

Die vorliegende Erfindung betrifft eine Frischluftanlagenkomponente für eine zur Frischluftversorgung einer Brennkraftmaschine dienenden Frischluftanlage, insbesondere in einem Kraftfahrzeug, gemäß dem Oberbegriff des Anspruchs 1. Eine derartige Frischluftanlagenkomponente ist beispielsweise eine Filtereinrichtung oder ein Schalldämpfer oder ein Frischluftkanal oder ein Frischluftverteiler, von dem aus die Frischluft über einzelne Rohre, insbesondere Saugrohre, Brennräumen der Brennkraftmaschine zugeführt wird.

Üblicherweise umfasst eine derartige Komponente ein Gehäuse, das eine Unterschale und eine Oberschale aufweist und das wenigstens einen Frischluftpfad begrenzt, der von wenigstens einem Frischlufteinlass des Gehäuses zu wenigstens einem Frischluftauslass des Gehäuses führt.

Bei Fahrzeuganwendungen erfolgt die Unterbringung der Frischluftanlage und deren Komponenten üblicherweise innerhalb eines Motorraums des Fahrzeugs, der an seiner Oberseite mit Hilfe einer Haube verschlossen ist. Dabei wird der im Motorraum zur Verfügung stehende Bauraum möglichst weitgehend ausgenutzt. Dabei kann es vorkommen, dass zumindest eine Komponente der Frischluftanlage proximal zur Haube des Motorraums angeordnet ist. Bei einer derartigen Anordnung der jeweiligen Frischluftanlagenkomponente unmittelbar unterhalb der Motorhaube kann es zu Problemen hinsichtlich des Fußgängerschutzes kommen, wenn sich die Frischluftanlagenkomponente in einem für die Motorhaube vorgesehenen Verstellweg befindet, in dem die Motorhaube im Falle eines Fußgängeraufpralls nachgeben soll.

Um hier im Verstellweg der Motorhaube durch die dicht unterhalb derselben angeordnete Frischluftanlagekomponente keine, die Verletzungsgefahr erhöhende, steife Störkontur zu bilden, ist es grundsätzlich möglich, das Gehäuse aus einem vergleichsweise biegeweichen Kunststoff herzustellen. Hierdurch besitzt das Gehäuse der jeweiligen Komponente ebenfalls eine gewisse Nachgiebigkeit, so dass eine Kollision der Motorhaube mit der Komponente eine Deformation des Gehäuses mit sich bringt, die jedoch aufgrund der verwendeten biegeweichen Materialien keine unzulässig hohen Kraftspitzen erzeugt.

Die Verwendung biegeweicher Materialien für die Herstellung des Gehäuses einer solchen Frischluftanlagenkomponente hat jedoch akustische Nachteile. Zum einen erfolgt in der Frischluft, die in der Frischluftanlage geführt wird, stets ein Transport von Druckwellen, welche durch die Verbrennung erzeugt werden. Diese verlaufen insbesondere entgegen der Strömungsrichtung der Frischluft. Zum anderen werden Schwingungen und Vibrationen der Brennkraftmaschine sowie des Fahrzeugs auf die Frischluftanlage übertragen. Sowohl die Innendruckpulsation als auch die Schwingungen und Vibrationen können das Gehäuse der Frischluftanlagenkomponente zu Schwingungen anregen, die einerseits zu einer unerwünschten Schallabstrahlung in den Motorraum führen kann und was andererseits eine hohe mechanische Belastung des Gehäuses darstellen kann.

Eine gattungsgemäße Frischluftanlagenkomponente ist aus der EP 1 426 237 A1 bekannt. Sie weist ein Gehäuse auf, das eine erste Schale und eine zweite Schale besitzt, wobei das Gehäuse einen Frischluftpfad begrenzt, der von einem Frischlufteinlass des Gehäuses zu einem Frischluftauslass des Gehäuses führt. Die zweite Schale ist dabei entlang eines zweiten Schalenrands an einem ersten Schalenrand der ersten Schale befestigt. Außerdem weist die zweite Schale eine geringere mechanische Festigkeit auf als die erste Schale, um den Fußgängerschutz der Komponente zu verbessern.

Aus der DE 10 2006 023 350 A1 ist ein Luftfilter bekannt, bei dem zum verbesserten Fußgängerschutz Stützelemente zwischen einer Oberschale und einer Unterschale angeordnet sind, die im Normalfall eine Relativlage zwischen Oberschale und Unterschale festlegen und die im Crashfall eine Relativbewegung zwischen Oberschale und Unterschale zulassen.

Die vorliegende Erfindung beschäftigt sich mit dem Problem, für eine Frischluftanlagenkomponente der vorstehend beschriebenen Art eine verbesserte Ausführungsform anzugeben, die sich insbesondere dadurch auszeichnet, dass eine Montage nahe an einer Unterseite einer Motorhaube möglich ist, während gleichzeitig Schwingungen des Gehäuses reduziert werden.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine erste Schale eines Gehäuses beabstandet von einem Schalenrand der ersten Schale mit wenigstens einem ersten Stützelement auszustatten, das zur Übertragung von Zug-und/oder Druckkräften mit einem dazu komplementär ausgeführten zweiten Stützelement einer zweiten Schale zusammenwirkt. Insbesondere ist bei einer bevorzugten Einbausituation die erste Schale eine Unterschale und die zweite Schale eine Oberschale. Die Oberschale des Gehäuses ist dann beabstandet von einem Oberschalenrand der Oberschale mit wenigstens einem oberen Stützelement ausgestattet, das zur Übertragung von Zug- und Druckkräften mit einem dazu komplementären unteren Stützelement zusammenwirkt. Über die miteinander zusammenwirkenden Stützelemente kann die Oberschale in ihrem vom Oberschalenrand beabstandeten Bereich an einer anderen Struktur festgehalten werden, wodurch die Schwingungsneigung der Oberschale signifikant reduziert werden kann.

Die relativen Richtungsangaben und Ortsangaben "oben" und "unten" beziehen sich dabei auf einen Einbauzustand der jeweiligen Frischluftanlagenkomponente in der Frischluftanlage bzw. in einem Motorraum eines Fahrzeugs. Beispielsweise befindet sich dann die Unterschale des Gehäuses unterhalb der Oberschale des Gehäuses, die sich ihrerseits unterhalb einer Motorhaube befindet. Es ist jedoch klar, dass grundsätzlich auch andere Einbausituationen denkbar sind.

Erfindungsgemäß ist die Oberschale dabei entlang ihres Oberschalenrands an einem Unterschalenrand der Unterschale befestigt, wodurch der vom Oberschalenrand beabstandete Bereich der Oberschale einer erhöhten Schwingungsanregung ausgesetzt ist. Da jedoch gerade in diesem Bereich die Stützelemente angeordnet sind, lassen sich unerwünschte Eigenschwingungen der Oberschale in diesem Bereich effektiv reduzieren.

Vorteilhaft ist eine Variante, bei welcher die Oberschale aus einem Oberschalenmaterial hergestellt ist, das biegeweicher ist als ein Unterschalenmaterial, aus dem die Unterschale hergestellt ist. Sofern das Gehäuse nahe an einer Unterseite einer Motorhaube in einem Motorraum angeordnet wird, befindet sich die Oberschale proximal zur Motorhaube, während die Unterschale dazu distal angeordnet ist. Sofern es bei einem Fußgängeraufprall auf die Motorhaube dazu kommt, dass sich die Motorhaube in den Motorraum hineinbewegt, trifft die Motorhaube auf die biegeweiche Oberschale und kann diese deformieren, ohne dass dabei unzulässig hohe Kraftspitzen entstehen.

Besonders vorteilhaft ist nun eine Weiterbildung, bei welcher die zusammenwirkenden Stützelemente zumindest ab einer vorbestimmten Druckkraft relativ zueinander reversibel, also ohne deren Zerstörung, verstellbar sind und eine Annäherung von Oberschale und Unterschale ermöglichen. Durch diese Maßnahme kann der Fußgängerschutz zusätzlich verbessert werden. Im Crashfall wird durch die in den Motorraum eindringende Motorhaube die Oberschale in Richtung Unterschale gedrückt. Da die Stützelemente ab einer vorbestimmten Druckkraft nachgeben und eine Relativverstellung zwischen Oberschale und Unterschale zulassen, können auch im Bereich der Stützelemente unzulässig hohe Kraftspitzen vermieden werden.

Bei einer anderen vorteilhaften Ausführungsform können die zusammenwirkenden Stützelemente jeweils einen Reibungsdämpfer bilden, in dem die Stützelemente relativ zueinander gegen Reibungskraft verstellbar sind und zumindest in einer Ausgangslage durch Reibungskraft gehalten sind. Insbesondere lassen sich die Reibungsdämpfer auch so gestalten, dass sie die Stützelemente in jeder Relativlage durch Reibungskraft aneinanderhalten. Innerhalb des jeweiligen Reibungsdämpfers lassen sich die Stützelemente gegen Reibungskraft relativ zueinander verstellen, wobei kinetische Energie in Wärme gewandelt wird. Dies kann zum einen dazu genutzt werden, Schwingungen der Oberschale zu bedämpfen. Zum anderen können die Reibungsdämpfer auch im Crashfall Energie absorbieren.

Bei einer anderen vorteilhaften Weiterbildung kann zur Realisierung eines derartigen Reibungsdämpfers das eine Stützelement ein zylindrischer Stift sein, während das andere Stützelement eine zylindrische Stiftaufnahme aufweist, in welche der Stift koaxial eingesteckt ist und darin gegen Reibungskraft axial verstellbar ist. Hierdurch ergibt sich für den jeweiligen Reibungsdämpfer eine besonders einfach und somit preiswert realisierbare Ausführungsform.

Bei einer alternativen Ausführungsform können die zusammenwirkenden Stützelemente jeweils einen Schnappverschluss bilden, in dem die Stützelemente in einer Schnappstellung mittels Haltekräften relativ zueinander fixiert sind, wobei die Stützelemente relativ zueinander aus der Schnappstellung heraus verstellbar sind, sobald am Schnappverschluss angreifende Druckkräfte die Haltekräfte übersteigen. Bei einer derartigen Ausführungsform bewirkt der jeweilige Schnappverschluss für Kräfte, die kleiner als die Haltekräfte des Schnappverschlusses sind, eine starre Anbindung der Oberschale an die jeweilige Struktur, an welcher das jeweilige untere Stützelement fixiert ist. Hierdurch lassen sich insbesondere Relativbewegungen, zum Beispiel Schwingungen, der Oberschale relativ zu besagter Struktur vermeiden. Werden dagegen die Haltekräfte im Crashfall durch Druckkräfte überwunden, ermöglicht der jeweilige Schnappverschluss eine Relativbewegung zwischen Oberschale und Unterschale, so dass auch hier unzulässig hohe Kraftspitzen vermieden werden können.

Entsprechend einer vorteilhaften Weiterbildung kann der jeweilige Schnappverschluss auch so konfiguriert sein, dass die Stützelemente relativ zueinander aus der Schnappstellung heraus auch dann verstellbar sind, wenn am Schnappverschluss angreifende Zugkräfte die Haltekräfte übersteigen. Somit ist es, beispielsweise für Wartungszwecke, insbesondere möglich, die Oberschale von der Unterschale abzunehmen. Dabei kann vorgesehen sein, dass die in der Druckrichtung wirkenden Haltekräfte und die in der Zugrichtung wirkenden Haltekräfte ungleich sind. Beispielsweise können die in der Druckrichtung wirksamen Haltekräfte mit relativ engen Toleranzen vorgegeben sein, während die in der Zugrichtung wirkenden Haltekräfte mit vergleichsweise großen Toleranzen versehen sein können.

Bei einer anderen vorteilhaften Ausführungsform kann zur Realisierung eines derartigen Schnappverschlusses vorgesehen sein, dass das eine Stützelement zumindest eine Rastkontur aufweist, während das andere Stützelement zumindest zwei quer zur Zug- und Druckkraftrichtung federelastische Federarme mit je einer Gegenrastkontur aufweist, wobei die Gegenrastkonturen in der Schnappstellung mit der Rastkontur verrastet sind. Durch die Geometrie der Rastkontur bzw. der Rastkonturen lassen sich die Haltekräfte für die Druckkraftrichtung und für die Zugkraftrichtung definieren.

Bei einer anderen vorteilhaften Ausführungsform können die zusammenwirkenden Stützelemente bezüglich der Zug- und Druckkraftrichtung rotationssymmetrisch ausgestaltet sein. Insbesondere lassen sich mit Hilfe derartiger Stützelemente singuläre Abstützstellen für den vom Oberschalenrand beabstandeten Bereich der Oberschale realisieren. Insbesondere lassen sich dadurch gezielt diejenigen Bereiche der Oberschale abstützen, die einer erhöhten Schwingungsgefahr ausgesetzt sind.

Bei einer alternativen Ausführungsform können die zusammenwirkenden Stützelemente dagegen quer zur Zug- und Druckkraftrichtung geradlinig ausgestaltet sein. Anstelle einer punktförmigen Kraftabstützung kann in diesem Fall eine linienförmige Abstützung realisiert werden, wodurch es möglich ist, größere Bereiche der Oberschale gezielt abzustützen.

Erfindungsgemäß sind mehrere zusammenwirkende Stützelemente gezielt so angeordnet, dass sie zumindest eine zusammenhängende Stützlinie ausbilden, innerhalb der mehrere zusammenwirkende Stützelemente aneinander gereiht sind. Hierdurch kann eine linienförmige Abstützung der Oberschale realisiert werden, deren Länge größer ist als die Länge eines einzelnen Stützelements.

Erfindungsgemäß bildet die jeweilige Stützlinie innerhalb des Frischluftpfads eine Strömungsleitkontur. Hierdurch erhalten die miteinander zusammenwirkenden Stützelemente eine Zusatzfunktion, da sie zusätzlich zur Führung der Frischluft innerhalb des Gehäuses dienen.

Besonders zweckmäßig ist dabei eine Weiterbildung, bei welcher die einzelnen zusammenwirkenden Stützelemente entlang der Stützlinie geradlinig ausgestaltet sind. Hierdurch kann eine vergleichsweise lange Stützlinie innerhalb des Gehäuses realisiert werden, die quer zu ihrer Längsrichtung vergleichsweise schmal oder dünn konfiguriert ist. Dies lässt sich insbesondere zur Realisierung einer Strömungsleitkontur innerhalb des Gehäuses nutzen.

Gemäß einer anderen vorteilhaften Ausführungsform kann zumindest ein unteres Stützelement an der Unterschale ausgebildet sein. Auf diese Weise kann die Oberschale über die miteinander zusammenwirkenden Stützelemente unmittelbar an der Unterschale abgestützt werden. Eine derartige Ausführungsform eignet sich insbesondere für den Fall, dass die Frischluftanlagenkomponente einen Frischluftkanal definiert bzw. durch einen Frischluftkanal gebildet ist.

Zusätzlich oder alternativ ist es möglich, zumindest ein unteres Stützelement an einer der Oberschale zugewandten Endscheibe eines in das Gehäuse eingesetzten Filterelements auszubilden. In diesem Fall ist die Frischluftanlagenkomponente eine Filtereinrichtung. Die Abstützung der Oberschale erfolgt dabei an der Unterschale nur noch mittelbar, nämlich über das Filterelement. Durch diese Bauweise lässt sich für das Filterelement eine Zusatzfunktion realisieren, nämlich die schwingungsreduzierende Abstützung der Oberschale. Gleichzeitig kann die Filtereinrichtung dadurch vergleichsweise kompakt realisiert werden.

Das jeweilige obere Stützelement kann bezüglich der Oberschale ein separat hergestelltes Bauteil sein, das auf entsprechende, geeignete Weise an der Oberschale befestigt ist. Alternativ kann das jeweilige obere Stützelement auch integral an der Oberschale ausgeformt sein. Das jeweilige untere Stützelement kann bezüglich der Unterschale und/oder bezüglich der jeweiligen Endscheibe des Filterelements ein separat hergestelltes Bauteil sein. Alternativ ist es ebenso möglich, das jeweilige untere Stützelement integral an der Unterschale bzw. integral an der jeweiligen Endscheibe auszuformen.

Zwischen dem Oberschalenrand und dem Unterschalenrand kann eine Rastverbindung ausgebildet sein, um die Oberschale an der Unterschale festzulegen. Dabei kann insbesondere vorgesehen sein, am Oberschalenrand und am Unterschalenrand die zum Herstellen der Rastverbindung miteinander zusammenwirkenden Rastkonturen unmittelbar auszuformen. In diesem Fall bildet dann der eine Schalenrand eine Rastkontur, während der andere Schalenrand dann eine dazu komplementäre Gegenrastkontur bildet.

Zur Unterdrückung der Schwingungsneigung großflächiger Bereiche des Gehäuses ist es grundsätzlich denkbar, die schwingungsgefährdeten großflächigen Bereiche der Oberschale bzw. der Unterschale mit Rippen oder Sicken zu versehen, die zu einer entsprechenden Versteifung der betroffenen Bereiche führen. Im Hinblick auf eine für den Fußgängerschutz erwünschte weiche Konfiguration der Oberschale ist dies jedoch kontraproduktiv. Bevorzugt wird daher eine Konfiguration, bei welcher zumindest die Oberschale rippenfrei und/oder sickenfrei ausgestaltet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch,

- Fig. 1: eine perspektivische Ansicht einer Frischluftanlagenkomponente,
- Fig. 2: eine stark vereinfachte Schnittansicht zusammenwirkender Stützelemente,
- Fig. 3-5: unterschiedliche Varianten zusammenwirkender Stützelemente, jeweils in einer perspektivischen Ansicht (a), in einer Schnittansicht (b) und für Fig. 5 außerdem in einer geschnittenen isometrischen Ansicht (c),
- Fig. 6-11: jeweils eine stark vereinfachte Schnittansicht zusammenwirkender Stützelemente bei verschiedenen Ausführungsformen,
- Fig. 12: eine weitere Ausführungsform zusammenwirkender Stützelemente bei verschiedenen Zuständen (a) und (b) sowie in einer isometrischen Ansicht von oberen Stützelementen (c),
- Fig. 13: eine isometrische Ansicht einer anderen Frischgasanlagenkomponente,
- Fig. 14: eine Schnittansicht der Komponente aus Fig. 13.

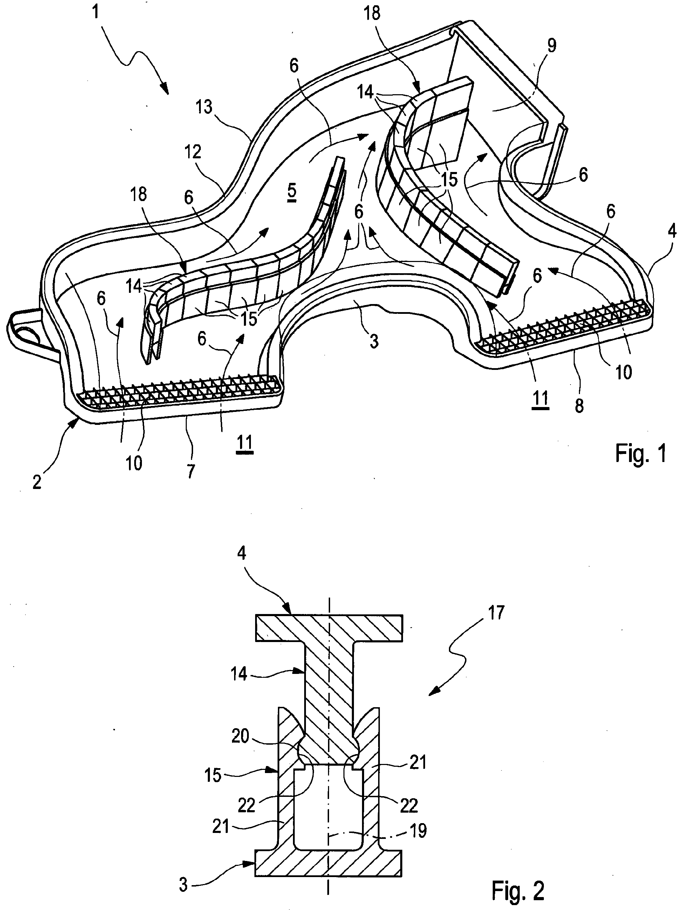

Entsprechend Figur 1 umfasst eine Frischluftanlagenkomponente 1 einer Frischluftanlage, die bei einer Brennkraftmaschine, insbesondere in einem Kraftfahrzeug, zur Frischluftversorgung dient, ein Gehäuse 2, das eine Unterschale 3 und eine Oberschale 4 aufweist. Die Oberschale 4 ist in Figur 1 transparent dargestellt, um in einen Innenraum 5 des Gehäuses 2 einsehen zu können. In dem von der Unterschale 3 und der Oberschale 4 begrenzten Innenraum 5 ist im Gehäuse 2 zumindest ein Frischluftpfad 6 ausgebildet, der in Figur 1 durch Pfeile angedeutet ist. Im Beispiel der Figur 1 sind mehrere Frischluftpfade 6 ausgebildet, die jeweils von einem Frischlufteinlass 7 bzw. 8 zu einem Frischluftauslass 9 führen. Im Beispiel der Figur 1 weist das Gehäuse 2 zwei separate Frischlufteinlässe 7 und 8 auf. Ferner ist das Gehäuse 2 mit einem einzigen, gemeinsamen Frischluftauslass 9 ausgestattet. Im Beispiel der Figur 1 sind die beiden Frischlufteinlässe 7, 8 und der Frischluftauslass 9 ausschließlich in der Unterschale 3 ausgebildet. Insbesondere ist die jeweilige Öffnung dabei von einem Rahmen eingefasst, der ausschließlich durch Material der Unterschale 3 gebildet ist. Im Bereich der Frischlufteinlässe 7, 8 ist die Unterschale 3 außerdem jeweils mit einer Gitterstruktur 10 versehen, die insbesondere integral an der Unterschale 3 ausgeformt sein kann. Die in Figur 1 gezeigte Frischluftanlagenkomponente 1 ist als Frischluftkanal ausgebildet, der einen Ansaugbereich einer Frischluftanlage bildet, so dass die Frischlufteinlässe 7, 8 zu einer Umgebung 11 hin offen sind, während der Frischluftauslass 9 an die übrigen Frischluftanlage, insbesondere an eine Filtereinrichtung, angeschlossen ist.

Die Oberschale 4 ist biegeweicher ausgestaltet als die Unterschale 3. Insbesondere können Oberschale 4 und Unterschale 3 aus dem gleichen Material, insbesondere aus dem gleichen Kunststoff hergestellt sein. In diesem Fall ist die Unterschale 3 mittels Rippen und/oder Sicken ausgesteift, während die Oberschale 4 weitgehend sickenfrei sowie rippenfrei konzipiert ist. Bevorzugt wird jedoch eine Ausführungsform, bei welcher die Oberschale 4 aus einem Oberschalenmaterial hergestellt ist, das biegeweicher ist als ein Unterschalenmaterial, aus dem die Unterschale 3 hergestellt ist. Zusätzlich kann dann auch vorgesehen sein, die Oberschale 4 rippenfrei bzw. sickenfrei auszugestalten, während die Unterschale 3 grundsätzlich mit Hilfe von Rippen und/oder Sicken ausgesteift sein kann.

Die Oberschale 4 ist entlang eines Oberschalenrands 12 an einem Unterschalenrand 13 der Unterschale 3 befestigt. Insbesondere kann dabei vorgesehen sein, den Oberschalenrand 12 mit einer Rastkontur zu versehen und den Unterschalenrand 13 mit einer dazu komplementären Gegenrastkontur auszustatten. Rastkontur und Gegenrastkontur sind dabei so ausgestaltet, dass sie eine Rastverbindung unmittelbar zwischen den beiden Schalenrändern 12, 13 herstellen.

Die Oberschale 4 ist nun beabstandet von ihrem Oberschalenrand 12 mit wenigstens einem oberen Stützelement 14 ausgestattet, wobei komplementär zum jeweiligen oberen Stützelement 14 zumindest ein unteres Stützelement 15 vorgesehen ist, wobei die oberen Stützelemente 14 mit den unteren Stützelementen 15 zur Übertragung von Zug- und Druckkräften zusammenwirken.

Die zusammenwirkenden Stützelemente 14, 15 können somit Zug- und Druckkräfte, die an der Oberschale 4 angreifen, übertragen. Bezüglich der Oberschale 4 sind Zugkräfte dabei nach oben, also weg von der Unterschale 3 orientiert, während Druckkräfte nach unten, also zur Unterschale 3 hin orientiert sind.

Im Beispiel der Figur 1 sind die unteren Stützelemente 15 an der Unterschale 3 abgestützt, so dass sich die Oberschale 4 über die Stützelemente 14, 15 an der Unterschale 3 abstützt. Die an der Oberschale 4 angreifenden Kräfte können somit über die zusammenwirkenden Stützelemente 14, 15 auf die Unterschale 3 übertragen werden.

Die zusammenwirkenden Stützelemente 14,15 sind dabei zweckmäßig so konzipiert, dass sie zumindest ab einer vorbestimmten Druckkraft relativ zueinander verstellbar sind und eine Annäherung von Oberschale 4 und Unterschale 3 ermöglichen. Mit anderen Worten, sobald eine vorbestimmte Druckkraft an der Oberschale 4 erreicht ist, geben die miteinander zusammenwirkenden Stützelemente 14, 15 nach, so dass sich die Oberschale 4 in Richtung Unterschale 3 bewegen kann.

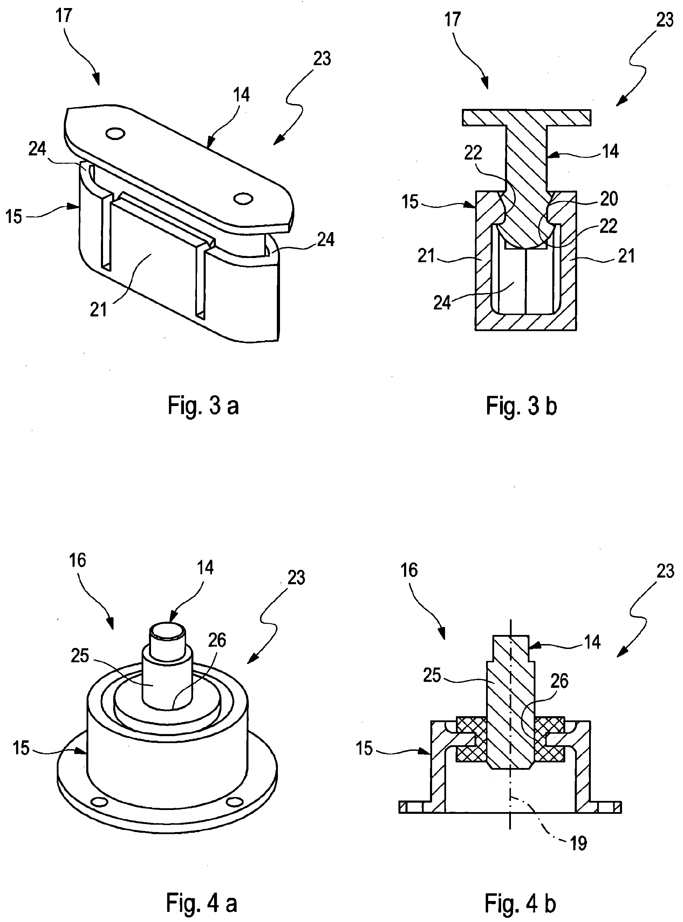

Grundsätzlich können die zusammenwirkenden Stützelemente 14, 15 einen Reibungsdämpfer 16 bilden, wie er rein exemplarisch in den Figuren 4, 6 und 12 wiedergegeben ist. In einem derartigen Reibungsdämpfer 16 sind die Stützelemente 14, 15 relativ zueinander gegen Reibungskraft verstellbar. Zweckmäßig sind die Stützelemente 14, 15 im Reibungsdämpfer 16 zumindest in einer Ausgangslage, vorzugsweise jedoch in jeder beliebigen Relativlage durch Reibungskraft aneinander gehalten.

Alternativ können die zusammenwirkenden Stützelemente 14, 15 jeweils einen Schnappverschluss 17 bilden, wie er beispielsweise in den Figuren 2, 3, 5 und 11 wiedergegeben ist. Innerhalb des jeweiligen Schnappverschlusses 17 sind die zusammenwirkenden Stützelemente 14, 15 in einer Schnappstellung mittels Haltekräften relativ zueinander fixiert. Aus dieser Schnappstellung heraus lassen sich die Stützelemente 14, 15 relativ zueinander verstellen, sobald am Schnappverschluss 17 angreifende Druckkräfte die Haltekräfte übersteigen. Optional lassen sich die Schnappverschlüsse 17 auch so konfigurieren, dass sich die Stützelemente 14, 15 auch aus der Schnappstellung heraus verstellen lassen, sobald am Schnappverschluss 17 angreifende Zugkräfte die Haltekräfte übersteigen.

Bei der in Figur 1 gezeigten Ausführungsform sind mehrere zusammenwirkende Stützelemente 14, 15 so aneinander gereiht, dass sie im Gehäuseinnenraum 5 zumindest eine zusammenhängende Stützlinie 18 ausbilden. Im Beispiel der Figur 1 sind im Gehäuseinnenraum 5 zwei derartige, getrennt voneinander verlaufende Stützlinien 18 ausgebildet, die jeweils durch mehrere zusammenhängend aneinander gereihte Stützelemente 14, 15 gebildet sind. Die Stützlinien 18 bilden hierbei im Gehäuseinneren 5 jeweils eine Strömungsleitkontur aus, die für den jeweiligen Frischluftpfad 6 eine Strömungsführung bewirkt. Durch die Strömungsleitkonturen, also durch die Stützlinien 18, lässt sich der Durchströmungswiderstand des Gehäuses 2 reduzieren. Wie sich Figur 1 entnehmen lässt, können die einzelnen zusammenwirkenden Stützelemente14, 15, welche die jeweilige Stützlinie 18 bilden, jeweils geradlinig ausgestaltet sein. Dabei sind sie in der Strömungslängsrichtung bzw. in der Längsrichtung der jeweiligen Stützlinie 18 flach konzipiert, so dass ihre Breite deutlich kleiner ist als ihre Länge und als ihre Höhe.

Die oberen Stützelemente 14 können gemäß Figur 1 an der Oberschale 4 integral ausgeformt sein. Eine derartige integrale Bauweise der oberen Stützelemente ist auch bei den Varianten der Figuren 2 und 6 bis 11 angedeutet. Alternativ dazu ist es grundsätzlich ebenso möglich, die oberen Stützelemente 14 bezüglich der Oberschale 4 als separate Bauteile zu konzipieren, die auf geeignete Weise an der Oberschale 4 befestigt werden können. Separate Ausführungsformen sind beispielsweise in den Figuren 3 bis 5 und 12 angedeutet. Entsprechendes gilt auch für die unteren Stützelemente 15, die gemäß Figur 1 integral an der Unterschale 3 ausgeformt sein können. Weitere integrierte Ausführungsformen für die unteren Stützelemente 15 sind außerdem in den Figuren 2, 6 bis 10 und 12 angedeutet. Ebenso können die unteren Stützelemente 15 bezüglich der Unterschale 3 als separate Bauteile konzipiert sein, die auf geeignete Weise an der Unterschale 3 befestigt werden können. Separat hergestellte untere Stützelemente sind beispielsweise in den Figuren 3 bis 5 und 11 angedeutet.

Figur 2 zeigt eine Kombination zusammenwirkender Stützelemente 14, 15, die einen Schnappverschluss 17 bilden. Die Stützelemente 14, 15 können dabei bezüglich einer Längsmittelachse 19 rotationssymmetrisch ausgestaltet sein. Die Längsmittelachse 19 ist dabei parallel zur Zug- und Druckkraftrichtung orientiert. Alternativ können die Stützelemente 14, 15 bezüglich der Zug- und Druckkraftrichtung auch geradlinig ausgestaltet sein, so dass Figur 2 lediglich einen Querschnitt der geradlinigen Stützelemente 14, 15 aus Figur 1 wiedergibt.

Zur Realisierung des Schnappverschlusses 17 besitzt das obere Stützelement 14 eine Rastkontur 20, die hier im Querschnitt nach außen konvex geformt ist. Das untere Stützelement 15 besitzt hier zumindest zwei Federarme 21, die quer zur Zug- und Druckkraftrichtung federelastisch sind und die jeweils eine Gegenrastkontur 22 aufweisen. Dabei ist die jeweilige Gegenrastkontur 22 zweckmäßig komplementär zur zugehörigen Rastkontur 20 geformt. Im Beispiel sind die Gegenrastkonturen 22 somit konkav gekrümmt. In der in Figur 2 gezeigten Schnappstellung ist die Rastkontur 20 mit den Gegenrastkonturen 22 verrastet.

Die Figuren 3a und 3b zeigen nun eine andere Ausführungsform für zusammenwirkende Stützelemente 14, 15, mit deren Hilfe ebenfalls ein Schnappverschluss 17 realisierbar ist. Erkennbar sind wieder die Rastkontur 20 sowie die Federarme 21 mit den Gegenrastkonturen 22. Während sich die in Figur 2 gezeigte Ausführungsform zur Realisierung zusammenhängender Stützlinien 18 eignet, kann mit Hilfe der in Figur 3a gezeigten Variante der zusammenwirkenden Stützelemente 14, 15 bevorzugt eine singuläre Stützstelle 23 realisiert werden. Insbesondere kann dabei das untere Stützelement 15 an seinen Längsenden jeweils eine Führungskontur 24 aufweisen, die gemeinsam eine Führung der beiden Stützelemente 14, 15 parallel zur Zug- und Druckkraftrichtung bewirken.

Ferner ist bei der in Figur 3 gezeigten Ausführungsform des Schnappverschlusses 17 die Konturierung der Stützelemente 14, 15 im Vergleich zur Ausführungsform der Figur 2 invertiert, so dass bei der in Figur 3 gezeigten Ausführungsform die Rastkontur 20 konkav gewölbt ist, während die Gegenrastkonturen 22 konvex gewölbt sind. Bei der in Figur 3 gezeigten Ausführungsform sind die Stützelemente 14, 15 des Schnappverschlusses 17 ebenfalls geradlinig sowie flach konzipiert.

Die Figuren 4a und 4b zeigen eine Ausgestaltung, bei welcher die zusammenwirkenden Stützelemente 14, 15 einen Reibungsdämpfer 16 bilden. Hierzu ist das obere Stützelement 14 mit einem zylindrischen Stift 25 ausgestattet bzw. als solcher ausgestaltet. Das untere Stützelement 15 besitzt eine zylindrische Stiftaufnahme 26, in welche der Stift 25 koaxial eingesteckt ist. Dabei sind der Stift 25 und die Stiftaufnahme 26 hinsichtlich der verwendeten Materialien und hinsichtlich der verwendeten Durchmesser so aufeinander abgestimmt, dass der Stift 25 in der Stiftaufnahme 26 axial gegen Reibungskraft verstellbar ist.

Bei der in Figur 4 gezeigten Ausführungsform ist der Reibungsdämpfer 16 bezüglich der Längsmittelachse 19 rotationssymmetrisch ausgestaltet. Die in Figur 4 gezeigte Ausführungsform des Reibungsdämpfers 16 eignet sich somit wieder zur Realisierung einer singulären Stützstelle 23.

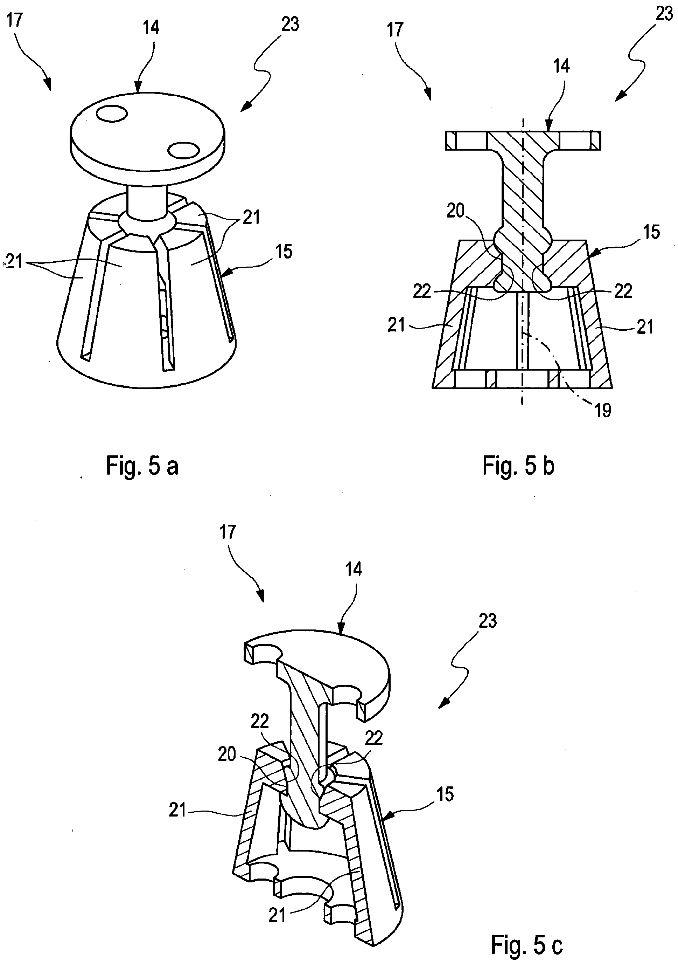

Auch die in Figur 5 gezeigte Ausführungsform zeigt zusammenwirkende Stützelemente 14, 15, die bezüglich der Längsmittelachse 19 rotationssymmetrisch ausgestaltet sind und die sich in besonderer Weise zur Realisierung singulärer Stützstellen 23 eignen. Erkennbar ist bei dieser Ausführungsform, dass das untere Stützelement 15 hier mehr als zwei Federarme 21 aufweist, die in der Umfangsrichtung gleichmäßig verteilt angeordnet sind. Zur Vergrößerung der Federkräfte sind die Federarme 21 bei der in Figur 5 gezeigten Ausführungsform gegenüber der Längsmittelachse 19 angestellt, wodurch das untere Stützelement 15 insgesamt eine kegelstumpfförmige Geometrie erhält.

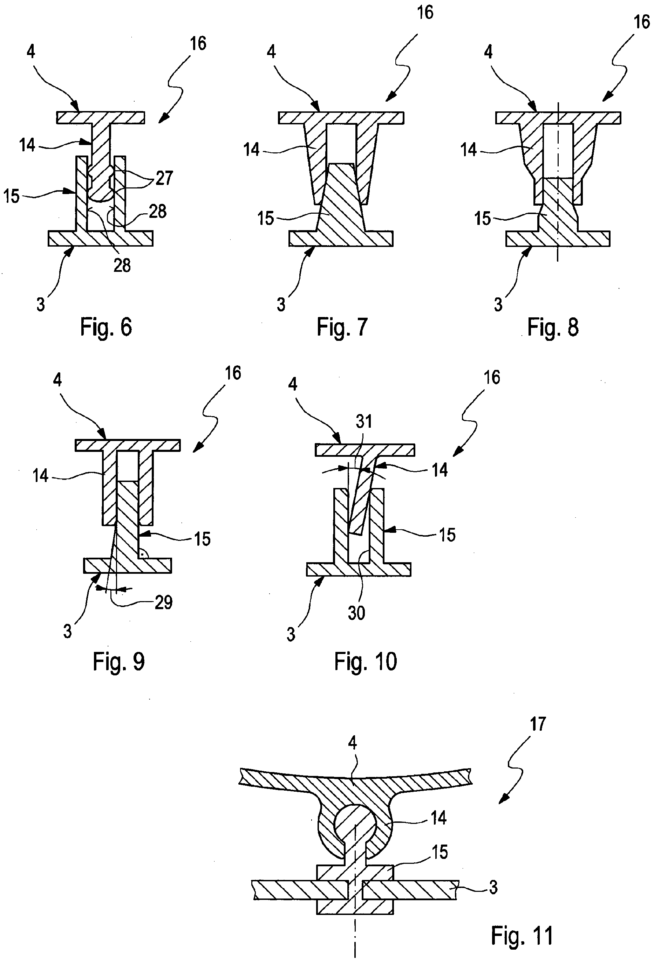

Figur 6 zeigt wieder einen Reibungsdämpfer 16, der rotationssymmetrisch oder geradlinig konzipiert sein kann. Anstelle eines zylindrischen Stifts 25 ist das obere Stützelement 14 hier mit mehreren Reibkonturen 27 ausgestattet, die mit entsprechenden Reibflächen 28 des unteren Stützelements 15 zusammenwirken.

Die Figuren 7 bis 9 zeigen weitere Varianten für miteinander zusammenwirkende Stützelemente 14, 15, die sich dadurch charakterisieren, dass zumindest eines der Stützelemente 14, 15 eine sich in Richtung der gegenüberliegenden Schale 3, 4 verjüngende Konizität besitzt. In Figur 7 sind beide Stützelemente 14, 15 konisch. In Figur 8 ist nur das untere Stützelement 15 konisch. In Figur 9 ist nur das untere Stützelement 15 konisch, und zwar hier nur an einer Seite, nämlich in Figur 9 links. Ein Konuswinkel 29 ist in Figur 9 rein exemplarisch angedeutet. Durch die Konizität wenigstens eines Stützelements 14, 15 nimmt die Kraft, die zum Verringern des Abstands zwischen Oberschale 4 und Unterschale 3 erforderlich ist, mit abnehmendem Abstand zu. Hierdurch können sich die der Deformation der Oberschale 4 entgegengerichteten Kräfte progressiv erhöhen.

Bei der in Figur 10 gezeigten Ausführungsform greift das obere Stützelement 14 in eine Aufnahme 30 des unteren Stützelements 15 ein, wobei zwischen dem oberen Stützelement 14 und dem unteren Stützelement 15 in einer Ausgangsstellung ein Winkel 31 eingestellt ist, der sich mit reduzierendem Abstand zwischen Oberschale 4 und Unterschale 3 reduziert, was mit einer entsprechenden Deformation wenigstens eines der Stützelemente 14, 15 einhergeht.

Figur 11 zeigt nun eine Ausführungsform, bei welcher die miteinander zusammenwirkenden Stützelemente 14, 15 wieder einen Schnappverschluss 17 definieren. In diesem Fall ist das untere Stützelement 15 in die Unterschale 3 eingeclipst. Dabei kann insbesondere vorgesehen sein, dass diese Clipsverbindung zwischen dem unteren Stützelement 15 und der Unterschale 3 ab einer vorbestimmten Druckkraft nachgibt, so dass das Unterstützelement 15 nach unten aus der Unterschale 3 herausgedrückt werden kann.

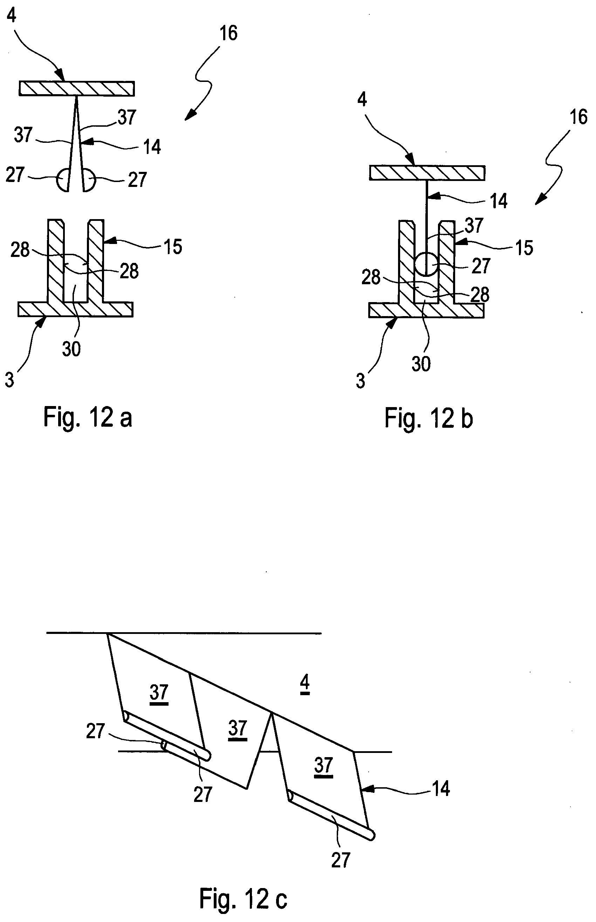

Die Figuren 12a bis 12c zeigen eine weitere Ausführungsform für zusammenwirkende Stützelemente 14, 15, die einen Reibungsdämpfer 16 bilden. Wie bei der in Figur 10 gezeigten Ausführungsform besitzt das unter Stützelement 15 hierbei wieder eine Aufnahmeöffnung 30, in die das obere Stützelement 14 eintaucht. Das obere Stützelement 14 ist hierbei gemäß Figur 12c segmentiert und besitzt in entgegengesetzte Richtungen geneigte Segmente 37, die jeweils eine Reibkontur 27 aufweisen. Sobald die Segmente 37 in die Aufnahmeöffnung 30 eingeführt sind, sind sie in entgegengesetzten Richtungen gegen die Reibflächen 28 des unteren Stützelements 15 vorgespannt, die den Aufnahmeraum 30 begrenzen.

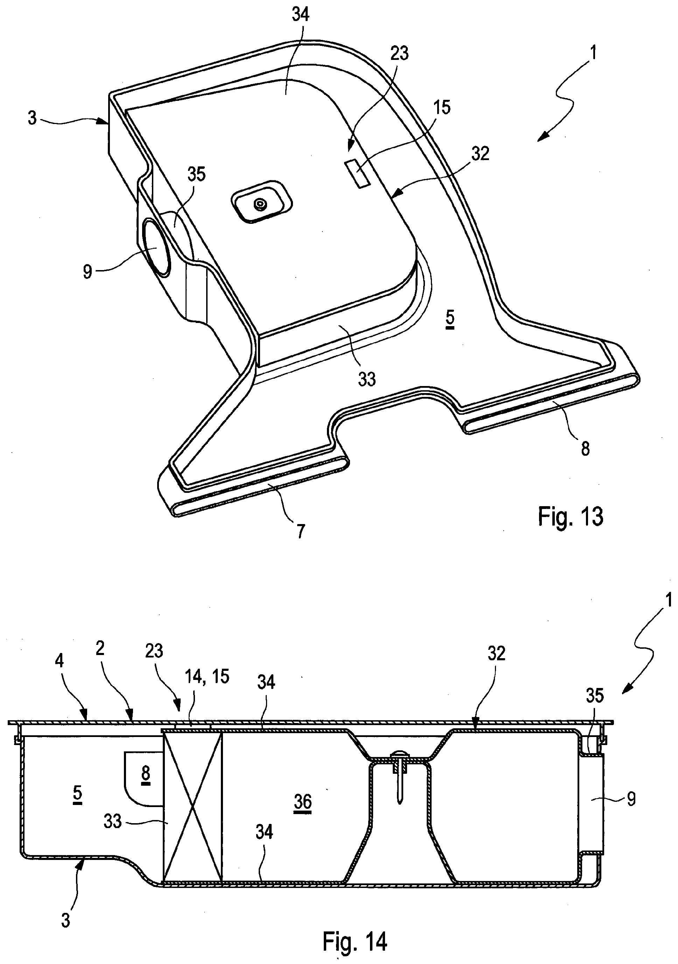

Während Figur 1 eine Frischluftanlagenkomponente 1 zeigt, die einen Frischluftkanal bildet und bei der die Oberschale 4 über die Stützelemente 14, 15 direkt an der Unterschale 3 abgestützt ist, zeigen die Figuren 13 und 14 eine Ausführungsform, bei welcher die Frischluftanlagenkomponente 1 durch eine Filtereinrichtung gebildet ist, bei der im Gehäuse 2 ein Filterelement 32 angeordnet ist. Das Filterelement 32 besitzt einen Filterkörper 33, der axial stirnseitig jeweils durch eine Endscheibe 34 verschlossen ist. Die Axialrichtung des Filterelements 33 erstreckt sich dabei im Einbauzustand der Komponente 1 vertikal, so dass eine obere Endscheibe 34 der Oberschale 4 zugewandt ist, während eine untere Endscheibe 34 der Unterschale 3 zugewandt ist. Im Beispiel der Figuren 13 und 14 ist nun zumindest ein unteres Stützelement 15 an der oberen Endscheibe 34, die der Oberschale 4 zugewandt ist, ausgebildet. In Figur 13 ist zur besseren Darstellung die Oberschale 4 nicht wiedergegeben. Wie sich insbesondere Figur 14 entnehmen lässt, befinden sich die miteinander zusammenwirkenden Stützelemente 14, 15 im Bereich des Filterkörpers 33. Es ist klar, dass auch bei der in Figur 13 und 14 gezeigten Ausführungsform mehrere zusammenwirkende Stützelemente 14, 15 vorgesehen sein können, um weitere, voneinander beabstandete singuläre Stützstellen 23 zu definieren.

Das Gehäuse 2 besitzt in seiner Unterschale 3 auch bei der in den Figuren 13 und 14 gezeigten Ausführungsform wieder zwei Frischlufteinlässe 7, 8 und einen Frischluftauslass 9, an den ein Anschlussstutzen 35 des Filterelements 32 angeschlossen ist. Die Frischluft gelangt so durch die Frischlufteinlässe 7, 8 in den Gehäuseinnenraum 5 und von diesem durch den Filterkörper 33 in einen Innenraum 36 des Filterelements, von dem aus die Frischluft durch den Anschlussstutzen 35 und durch den Frischluftauslass 9 aus dem Gehäuse 2 austritt.

## Patentansprüche

1. Frischluftanlagenkomponente einer zur Frischluftversorgung einer Brennkraftmaschine dienenden Frischluftanlage, insbesondere in einem Kraftfahrzeug,
- mit einem Gehäuse (2), das eine erste Schale (3) und eine zweite Schale (4) aufweist,
- wobei das Gehäuse (2) wenigstens einen Frischluftpfad (6) begrenzt, der von mindestens einem Frischlufteinlass (7, 8) des Gehäuses (2) zu wenigstens einem Frischluftauslass (9) des Gehäuses (2) führt,
- wobei die zweite Schale (4) entlang eines zweiten Schalenrands (12) an einem ersten Schalenrand (13) der ersten Schale (3) befestigt ist,
**dadurch gekennzeichnet,**
- **dass** die zweite Schale (4) beabstandet vom zweiten Schalenrand (12) wenigstens ein zweites Stützelement (14) aufweist, das mit einem dazu komplementären ersten Stützelement (15) zur Übertragung von Zug- und Druckkräften zusammenwirkt,
- **dass** mehrere zusammenwirkende Stützelemente (14, 15) zur Ausbildung wenigstens einer zusammenhängenden Stützlinie (18) aneinander gereiht sind,
- **dass** die jeweilige Stützlinie (18) innerhalb des Frischluftpfads (6) eine Strömungsleitkontur bildet.

2. Komponente nach Anspruch 1,
**dadurch gekennzeichnet,**
- **dass** die erste Schale eine Unterschale (3) ist,
- **dass** die zweite Schale eine Oberschale (4) ist,
- **dass** der erste Schalenrand ein Unterschalenrand (13) ist,
- **dass** der zweite Schalenrand ein Oberschalenrand (12) ist,
- **dass** das erste Stützelement ein unteres Stützelement (15) ist,
- **dass** das zweite Stützelement ein oberes Stützelement (14) ist.

3. Komponente nach Anspruch 1 oder 2,
**dadurch gekennzeichnet,**
**dass** die zusammenwirkenden Stützelemente (14, 15) zumindest ab einer vorbestimmten Druckkraft relativ zueinander verstellbar sind und eine Annäherung von Oberschale (4) und Unterschale (3) ermöglichen.

4. Komponente nach einem der Ansprüche 1 bis 3,
**dadurch gekennzeichnet,**
**dass** die zusammenwirkenden Stützelemente (14, 15) jeweils einen Reibungsdämpfer (16) bilden, in dem die Stützelemente (14, 15) relativ zueinander gegen Reibungskraft verstellbar sind und zumindest in einer Ausgangslage durch Reibungskraft gehalten sind.

5. Komponente nach Anspruch 4,
**dadurch gekennzeichnet,**
**dass** das eine Stützelement (14) einen zylindrischen Stift (25) aufweist, während das andere Stützelement (15) eine zylindrische Stiftaufnahme (26) aufweist, in welche der Stift (25) koaxial eingesteckt ist und darin gegen Reibungskraft axial verstellbar ist.

6. Komponente nach einem der Ansprüche 1 bis 3,
**dadurch gekennzeichnet,**
**dass** die zusammenwirkenden Stützelemente (14, 15) jeweils einen Schnappverschluss (17) bilden, in dem die Stützelemente (14, 15) in einer Schnappstellung mittels Haltekräften relativ zueinander fixiert sind, wobei die Stützelemente (14, 15) relativ zueinander aus der Schnappstellung heraus verstellbar sind, sobald am Schnappverschluss (17) angreifende Druckkräfte die Haltekräfte übersteigen.

7. Komponente nach Anspruch 6,
**dadurch gekennzeichnet,**
**dass** die Stützelemente (14, 15) relativ zueinander aus der Schnappstellung heraus auch verstellbar sind, sobald am Schnappverschluss (17) angreifende Zugkräfte die Haltekräfte übersteigen.

8. Komponente nach Anspruch 6 oder 7,
**dadurch gekennzeichnet,**
- **dass** das eine Stützelement (14) wenigstens eine Rastkontur (20) aufweist,
- **dass** das andere Stützelement (15) mindestens zwei quer zur Zug- und Druckkraftrichtung federelastische Federarme (21) mit je einer Gegenrastkontur (22) aufweist,
- **dass** die Gegenrastkonturen (22) in der Schnappstellung mit der Rastkontur (20) verrastet sind.

9. Komponente nach einem der Ansprüche 1 bis 8,
**dadurch gekennzeichnet,**
- **dass** die zusammenwirkenden Stützelemente (14, 15) bezüglich der Zug- und Druckkraftrichtung rotationssymmetrisch ausgestaltet sind, oder
- **dass** die zusammenwirkenden Stützelemente (14, 15) quer zur Zug- und Druckkraftrichtung geradlinig ausgestaltet sind.

10. Komponente nach einem der vorhergehenden Ansprüche,
**dadurch gekennzeichnet,**
**dass** die zweite Schale (4) biegeweicher ausgestaltet ist als die erste Schale (3).

11. Komponente nach einem der vorhergehenden Ansprüche,
**dadurch gekennzeichnet,**
**dass** die einzelnen zusammenwirkenden Stützelemente (14,15) entlang der Stützlinie (18) geradlinig ausgestaltet sind.

12. Komponente nach einem der Ansprüche 1 bis 11,
**dadurch gekennzeichnet,**
**dass** zumindest ein unteres Stützelement (15) an der Unterschale (3) ausgebildet ist.

13. Komponente nach einem der Ansprüche 1 bis 12,
**dadurch gekennzeichnet,**
**dass** zumindest ein unteres Stützelement (15) an einer der Oberschale (4) zugewandten Endscheibe (34) eines in das Gehäuse (2) eingesetzten Filterelements (32) ausgebildet ist.

## Claims

1. A fresh air system component of a fresh air system serving to supply fresh air to an internal combustion engine, in particular in a motor vehicle,
- having a housing (2), which has a first shell (3) and a second shell (4),
- wherein the housing (2) delimits at least one fresh air path (6), which runs from at least one fresh air inlet (7, 8) of the housing (2) to at least one fresh air outlet (9) of the housing (2),
- wherein the second shell (4) is fastened along a second shell edge (12) to a first shell edge (13) of the first shell (3),
- wherein the second shell (4) has at least one second support element (14), which is at a distance from the second shell edge (12) and interacts with a first support element (15) that is complementary thereto in order to transmit tensile and compressive forces,
**characterised in**
- **that** a plurality of interacting support elements (14, 15) are arranged in a row in order to form at least one cohesive support line (18),
- **that** the respective support line (18) forms a flow-directing contour inside the fresh air path (6).

2. The component according to Claim 1,
**characterised in that**
- the first shell is a lower shell (3),
- the second shell is an upper shell (4),
- the first shell edge is a lower shell edge (13),
- the second shell edge is an upper shell edge (12),
- the first support element is a lower support element (15),
- the second support element is an upper support element (14).

3. The component according to Claim 1 or 2, **characterised in that** the interacting support elements (14, 15) can be displaced relative to each other and allow upper shell (4) and lower shell (3) to approach each other, at least upwards of a predefined compressive force.

4. The component according to any one of Claims 1 to 3, **characterised in that** the interacting support elements (14, 15) can each form a friction damper (16), **in that** the support elements (14, 15) can be displaced relative to each other counter to friction and are held by friction at least in a starting position.

5. The component according to Claim 4, **characterised in that** one support element (14) has a cylindrical pin (25), while the other support element (15) has a cylindrical pin receptacle (26), into which the pin (25) is inserted coaxially and can be displaced therein counter to friction.

6. The component according to any one of Claims 1 to 3, **characterised in that** the interacting support elements (14, 15) each form a snap closure (17), **in that** the support elements (14, 15) are fixed relative to each other in a snapped position by means of retaining forces, wherein the support elements (14, 15) can be displaced relative to each other out of the snapped position as soon as compressive forces acting on the snap closure (17) exceed the retaining forces.

7. The component according to Claim 6, **characterised in that** the support elements (14, 15) can also be displaced relative to each other out of the snapped position as soon as tensile forces acting on the snap closure (17) exceed the retaining forces.

8. The component according to Claim 6 or 7, **characterised in that**
- one support element (14) has at least one locking contour (20),
- the other support element (15) has at least two spring arms (21), which are resilient transversely to the tensile and compressive force direction and each have a counter locking contour (22),
- the counter locking contours (22) are locked with the locking contour (20) when in the snapped position.

9. The component according to any one of Claims 1 to 8, **characterised in that**
- the interacting support elements (14, 15) are rotationally symmetrical in relation to the tensile and compressive force direction, or
- the interacting support elements (14, 15) are straight transversely to the tensile and compressive force direction.

10. The component according to any one of Claims 1 to 9, **characterised in that** the second shell (4) is more flexible than the first shell (3).

11. The component according to any one of the preceding claims, **characterised in that** the individual interacting support elements (14, 15) are straight along the support line (18).

12. The component according to any one of Claims 1 to 11, **characterised in that** at least one lower support element (15) is formed on the lower shell (3).

13. The component according to any one of Claims 1 to 12, **characterised in that** at least one lower support element (15) is formed on an end disc (34), facing the upper sell (4), of a filter element (32) inserted into the housing (2).

## Revendications

1. Composant d'installation d'air frais d'une installation d'air frais servant à l'alimentation en air frais d'un moteur à combustion interne, en particulier dans un véhicule automobile,
- avec un boîtier (2) qui présente une première coque (3) et une seconde coque (4),
- le boîtier (2) délimitant au moins une voie d'air frais (6) qui mène d'au moins une entrée d'air frais (7, 8) du boîtier (2) à au moins une sortie d'air frais (9) du boîtier (2),
- la seconde coque (4) étant fixée le long d'un second bord de coque (12) sur un premier bord de coque (13) de la première coque (3),
**caractérisé en ce que**
- la seconde coque (4) présente, à distance du second bord de coque (12), au moins un second élément d'appui (14) qui coagit avec un premier élément d'appui (15) complémentaire à celui-ci pour la transmission de forces de traction et de pression,
- plusieurs éléments d'appui (14, 15) coopérants sont juxtaposés pour la réalisation au moins d'une ligne d'appui (18) contiguë,
- la ligne d'appui respective (18) forme un contour d'écoulement dans la voie d'air frais (6).

2. Composant selon la revendication 1,
**caractérisé en ce que**
- la première coque est une coque inférieure (3),
- la seconde coque est une coque supérieure (4),
- le premier bord de coque est un bord de coque inférieure (13),
- le second bord de coque est un bord de coque supérieure (12),
- le premier élément d'appui est un élément d'appui inférieur (15),
- le second élément d'appui est un élément d'appui supérieur (14).

3. Composant selon la revendication 1 ou 2,
**caractérisé en ce que**
les éléments d'appui (14, 15) coopérants sont réglables l'un par rapport à l'autre au moins à partir d'une force de pression prédéterminée et permettent un rapprochement de la coque supérieure (4) et la coque inférieure (3).

4. Composant selon l'une quelconque des revendications 1 à 3,
**caractérisé en ce que**
les éléments d'appui (14, 15) coopérants forment respectivement un amortisseur de friction (16), dans lequel les éléments d'appui (14, 15) sont réglables l'un par rapport à l'autre contre la force de friction et sont maintenus au moins dans une position de départ par la force de friction.

5. Composant selon la revendication 4,
**caractérisé en ce que**
l'un élément d'appui (14) présente une tige cylindrique (25) alors que l'autre élément d'appui (15) présente un logement de tige cylindrique (26), dans lequel la tige (25) est enfichée coaxialement et est réglable axialement dedans contre la force de friction.

6. Composant selon l'une quelconque des revendications 1 à 3,
**caractérisé en ce que**
les éléments d'appui (14,15) coopérants forment respectivement une fermeture à déclic (17), dans laquelle les éléments d'appui (14, 15) sont fixés l'un par rapport à l'autre dans une position d'enclenchement à l'aide de forces de retenue, les éléments d'appui (14, 15) étant réglables l'un par rapport à l'autre hors de la position d'enclenchement dès que des forces de pression agissant sur la fermeture à déclic (17) dépassent les forces de retenue.

7. Composant selon la revendication 6,
**caractérisé en ce que**
les éléments d'appui (14, 15) sont aussi réglables l'un par rapport à l'autre hors de la position d'enclenchement, dès que des forces de traction agissant sur la fermeture à déclic (17) dépassent les forces de retenue.

8. Composant selon la revendication 6 ou 7,
**caractérisé en ce que**
- l'un élément d'appui (14) présente au moins un contour d'encliquetage (20),
- l'autre élément d'appui (15) présente au moins deux bras de ressort (21) élastiques transversalement au sens des forces de traction et de pression chacun avec un contour d'encliquetage antagoniste (22),
- les contours d'encliquetage antagoniste (22) sont encliquetés dans la position d'enclenchement avec le contour d'encliquetage (20).

9. Composant selon l'une quelconque des revendications 1 à 8,
**caractérisé en ce que**
- les éléments d'appui (14, 15) coopérants sont configurés à symétrie de rotation par rapport au sens des forces de traction et de pression ou
- les éléments d'appui (14, 15) coopérants sont configurés en ligne droite transversalement au sens des forces de traction et de pression.

10. Composant selon l'une quelconque des revendications précédentes,
**caractérisé en ce que**
la seconde coque (4) est configurée de manière plus souple en flexion que la première coque (3).

11. Composant selon l'une quelconque des revendications précédentes,
**caractérisé en ce que**
les éléments d'appui (14, 15) coopérants individuels sont configurés en ligne droite le long de la ligne d'appui (18).

12. Composant selon l'une quelconque des revendications 1 à 11,
**caractérisé en ce que**
au moins un élément d'appui inférieur (15) est réalisé sur la coque inférieure (3).

13. Composant selon l'une quelconque des revendications 1 à 12,
**caractérisé en ce que**
au moins un élément d'appui inférieur (15) est réalisé sur un disque d'extrémité (34) tourné vers la coque supérieure (4) d'un élément de filtre (32) inséré dans le boîtier (2).
